Europäisches Patentamt

European Patent Office

Office européen des brevets

(11) Publication number: **0 239 891**
**A2**

# (12) EUROPEAN PATENT APPLICATION

(21) Application number: **87104148.9**

(51) Int. Cl.⁴: **C08G 18/50**

(22) Date of filing: **20.03.87**

(30) Priority: **31.03.86 US 846129**

(43) Date of publication of application:
**07.10.87 Bulletin 87/41**

(84) Designated Contracting States:
**AT BE CH DE FR GB IT LI NL**

(71) Applicant: **BASF Corporation**
**9 Campus Drive**
**Parsippany, NJ 07054(US)**

(72) Inventor: **Dell, James Raymond**
**21142 Knudsen Drive**
**Grosse Ile Michigan 48138(US)**
Inventor: **Robertson, Earl James**
**3301 Biddle Avenue**
**Wyandotte Michigan 48192(US)**

(74) Representative: **Wurzler, Hartmut, Dr. et al**
**i.Fa. BASF Aktiengesellschaft**
**Carl-Bosch-Strasse 38**
**D-6700 Ludwigshafen(DE)**

(54) **Flame retardant high density rigid polyurethane foams.**

(57) The invention pertains to flame retardant high density rigid polyurethane foams prepared by the reaction of an alkylene oxide adduct of toluenediamine or diaminodiphenylmethane with an organic polyisocyanate and a blowing agent wherein melamine is incorporated as the sole flame retardant compound. The amount of melamine is at least 5 percent by weight of the total composition.

EP 0 239 891 A2

## FLAME RETARDANT HIGH DENSITY RIGID POLYURETHANE FOAMS

The present invention pertains to high density rigid foam compositions and in particular to high density rigid polyurethane flame-retardant foam compositions and methods for the preparations thereof. More particularly, the present invention relates to the preparation of high density rigid polyurethane flame-retardant employing foam compositions which contain an effective amount of melamine as the sole flame retardant in combination with alkylene oxide adducts of toluenediamine or diaminodiphenylmethane.

The preparation of polyurethane flame-retardant foam compositions are generally well known as evidenced by the following prior art. U.S. Patent 4,022,718 teaches the preparation of high resilience cold-cured polyurethane foams incorporating 2,3-dibromo-1,4-butenediol as a chain extender and flame-retardant component. U.S. Patent 4,147,847 teaches a method of preparing flexible, flame-retarded, polyurethane foams by employing specific foam stabilizers which reduce the required amount of normal flame-retardant additives. U.S. Patent 4,162,353 teaches the preparation of flexible polyurethane foams incorporating therein a halo-substituted alkyl phosphate such as, for example, tris(2-chlorethyl)-phosphate and an unsubstituted trialkylphosphate such as, for example triethylphosphate. U.S. Patent 4,258,141 teaches the preparation of flexible polyurethane foams with cyanic acid derivatives including melamine.

The present invention applies to high density, rigid polyurethane foam compositions, which are prepared by the reaction of any alkylene oxide adduct of toluenediamine or diaminodiphenylmethane with an organic polyisocyanate in the presence of an effective amount of melamine. The amount of melamine ranges from about 5 weight percent to about 20 weight percent based on the total weight of the composition. Melamine is employed as the sole flame retardant compound.

For a more complete understanding of the present invention, reference is made to the following detailed description and the examples thereof.

It has unexpectedly been found that, in the preparation of high density rigid flame-retardant polyurethane foam products the amount of melamine necessary to pass the UL94V-O classification is at least 5 percent by weight based on the total weight of the composition. Lesser amounts will be insufficient to pass the specification.

The alkylene oxide adducts of the invention are prepared by reacting the alkylene oxides with 2,3-, 2,6-, 3,4-, 2,5-and 2,4-toluenediamine. The procedures employed are those well known to those skilled in the art.

Any suitable akylene oxide may be used such as ethylene oxide, propylene oxide, butylene oxide, omylene oxide and mixtures of these oxides. Preferred are ethylene oxide and propylene oxide wherein the ethylene oxide content is less than about 35 weight percent of the adduct. Additionally, 2,2'-, 2,4'-, and 4,4'-diaminodiphenylmethane may be reacted with alkylene oxides. The molecular weights of these adducts may range from about 400 to about 800. These adducts may be the sole polyols employed for the preparation of high density rigid polyurethane foams. Optionally, polyoxyethylene polyols, other than those derived from the diamines, may also be employed in conjunction with the adducts of the diamines. The amounts of these polyols may range from about 0 weight percent to about 50 weight percent based on the total weight of the foam composition. The molecular weight of these polyols may range from about 200 to about 1000.

Representative polyols which may be employed in the invention are well known to those skilled in the art. They are often prepared by the catalytic condensation of an alkylene oxide or mixture of alkylene oxides either simultaneously or sequentially with an organic compound having at least two active hydrogen atoms, such as evidenced by U.S. Patent Nos. 1,922,459; 3,190,927; and 3,346,557. Representative polyols include polyhydroxyl-containing polyesters, polyoxalkylene polyether polyols, polyhydroxy-terminated polyurethane polymers, polyhydroxyl-containing phosphorus compounds, and alkylene oxide adducts of polyhydric polythioesters, polyacetals, aliphatic polyols and thiols, ammonia, and amines including aromatic, aliphatic and heterocyclic amines, as well as mixtures thereof. Alkylene oxide adducts of compounds which contain 2 or more different groups within the above-defined classes may also be used, for example, amino alcohols which contain an amino group and a hydroxyl group. Also, alkylene oxide adducts of compounds which contain one SH group and one OH group as well as those which contain an amino group and an SH group may be used.

Any suitable hydroxy-terminated polyester may be used such as are prepared, for example, from polycarboxylic acids and polyhydric alcohols. Any suitable polycarboxylic acid may be used such as oxalic acid, malonic acid, succinic acid, glutaric acid, adipic acid, pimelic acid, suberic acid, azelaic acid, sebacic acid, brassylic acid, thapsic acid, maleic acid, fumaric acid, glutaconic acid, $\alpha$-hydromuconic acid, $\beta$-hydromuconic acid, $\alpha$-butyl-$\alpha$-ethyl-glutaric acid, $\alpha,\beta$-diethylsuccinic acid, isophthalic acid, terephthalic acid, hemimellitic acid, and 1,4-cyclohexanedicarboxylic acid. Any suitable polyhydric alcohol, including both

2

aliphatic and aromatic, may be used such as ethylene glycol, propylene glycol, trimethylene glycol, 1,2-butanediol, 1,3-butanediol, 1,4-butanediol, 1,2-petanediol, 1,4-pentanediol, 1,5-pentanediol, 1,6-hexanediol, 1,7-heptanediol, glycerol, 1,1,1-trimethylolpropane, 1,1,1-trimethylolethane, 1,2,6-hexanetriol, α-methyl glucoside, pentaerythritol, and sorbitol. Also included within the term "polyhydric alcohol" are compounds derived from phenol such as 2,2-bis(4-hydroxyphenyl)propane, commonly known as Bisphenol A.

The hydroxyl-containing polyester may also be a polyester amide such as is obtained by including some amine or amino alcohol in the reactants for the preparation of the polyesters. Thus, polyester amides may be obtained by condensing an amino alcohol such as ethanolamine with the polycarboxylic acids set forth above or they may be made using the same components that make up the hydroxyl-containing polyester with only a portion of the components being a diamine such as ethylene diamine.

Any suitable polyoxyalkylene polyether polyol may be used such as the polymerization product of an alkylene oxide or a mixture or alkylene oxides with a polyhydric alcohol. Any suitable polyhydric alcohol may be used such as those disclosed above for use in the preparation of the hydroxy-terminated polyesters. Any suitable alkylene oxide may be used such as ethylene oxide, propylene oxide, butylene oxide, amylene oxide, and mixtures of these oxides. The polyoxyalkylene polyether polyols may be prepared from other starting materials such as tetrahydrofuran and alkylene oxide-tetrahydrofuran mixtures; epilhalohydrins such as epichlorohydrin; as well as aralkylene oxides such as styrene oxide. The polyoxyalkylene polyether polyols may have either primary or secondary hydroxyl groups. Included among the polyether polyols are polyoxy-ethylene glycol, polyoxypropylene glycol, polyoxybutylene glycol, polytetramethylene glycol, block copolymers, for example, combinations of polyoxypropylene and polyoxyethylene glycols, poly-1,2-oxybutylene and polyoxyethylene glycols, poly-1,4-oxybutylene and polyoxyethylene glycols, and random copolymer glycols prepared from blends of two or more alkylene oxides or by the sequential addition of two or more alkylene oxides. The polyoxyalkylene polyether polyols may be prepared by any known process such as, for example, the process disclosed by Wurtz in 1859 and Encyclopedia of Chemical Technology, Vol. 7, pp. 257-262, published by Interscience Publishers, Inc. (1951) or in U.S. Patent No. 1,922,459. Polyethers which are preferred include the alkylene oxide addition products of trimethylolpropane, glycerine, pentaerythritol, sucrose, sorbitol, propylene glycol, and 2,2'-(4,4'-hydroxyphenyl)propane and blends thereof having equivalent weights of from 100 to 10,000.

Suitable polyhydric polythioethers which may be condensed with alkylene oxides include the condensation product of thiodiglycol or the reaction product of a dicarboxylic acid such as is disclosed above for the preparation of the hydroxyl-containing polyesters with any other suitable thioether glycol.

Polyhydroxyl-containing phosphorus compounds which may be used include those compounds disclosed in U.S. Patent No. 3,639,542. Preferred polyhydroxyl-containing phosphorus compounds are prepared from alkylene oxides and acids of phosphorus having a $P_2O_5$ equivalency of from about 72 percent to about 95 percent.

Suitable polyacetals which may be condensed with alkylene oxides include the reaction product of formaldehyde or other suitable aldehyde with a dihydric alcohol or an alkylene oxide such as those disclosed above.

Suitable aliphatic thiols which may be condensed with alkylene oxides include alkanethiols containing one or two -SH groups such a 2-mercaptoethanol, 1,2-ethanedithiol, 1,2-propanedithiol, 1,3-propanedithiol, and 1,6-hexanedithiol; alkene thiols such as 2-butene-1,4-dithiol; and alkyne thiols such as 3-hexyne-1,6-dithiol.

The polyurethane foams employed in the present invention are generally prepared by the reaction of the alkylene oxide adducts of toluenediamine or diaminodiphenylmethane with an organic polyisocyanate in the presence of a blowing agent and optionally in the presence of additional polyhydroxyl-containing components, chain-extending agents, catalysts, surface-active agents, stabilizers, dyes, fillers and pigments. Suitable processes for the preparation of cellular polyurethane foams are disclosed in U.S. Reissue Patent 24,514 together with suitable machinery to be used in conjunction therewith. When water is added as the blowing agent, corresponding quantities of excess polyisocyanate to react with the water and produce carbon dioxide may be used. It is also possible to proceed with the preparation of the polyurethane foams by a prepolymer technique wherein an excess of organic polyisocyanate is reacted in a first step with the diamine adducts of the present invention to prepare a prepolymer having free isocyanate groups which is then reacted in a second step with water and/or additional polyol to prepare a foam. Alternatively, the components may be reacted in a single working step commonly known as the "one-shot" technique of preparing polyurethanes. Furthermore, instead of water, low boiling hydrocarbons such as pentane, hexane, heptane, pentene, and heptene; azo compounds such as azohexahydrobenzodinitrile; halogenated hydrocarbons such as dichlorodifluoromethane, trichloro-fluoromethane, dichlorodifluoroethane, vinylidene chloride, and methylene chloride may be used as blowing agents.

Organic polyisocyanates which may be employed include aromatic, aliphatic, and cycloaliphatic polyisocyanates and combinations thereof. Representative of these types are the diisocyanates such as m-phenylene diisocyanate, 2,4-toluene diisocyanate, 2,6-toluene diisocyanate, mixtures of 2,4-and 2,6-toluene diisocyanate, hexamethylene diisocyanate, tetramethylene diisocyanate, cyclohexane-1,4-diisocyanate, hexahydrotoluene diisocyanate (and isomers), napthalene-1,5-diisocyanate, 1-methoxyphenyl-2,4-diisocyanate, 4,4'-diphenylmethane diisocyanate, 4,4'-biphenylene diisocyanate, 3,3'-dimethoxy-4,4'-biphenyl diisocyanate, 3,3'-dimethyl-4,4'-biphenyl diisocyanate and 3,3'-dimethyldiphenylmethane-4,4'-diisocyanate; the triisocyanates such as 4,4',4''-triphenylmethane triisocyanate, and toluene 2,4,6-triisocyanate; and the tetraisocyanates such as 4,4'-dimethyldiphenylmethane-2,2'-5,5'-tetraisocyanate and polymeric polyisocyanates such as polymethylene polyphenylene polyisocyanate. Especially useful due to their availability and properties are toluene diisocyanate, 4,4'-diphenylmethane diisocyanate and polymethylene polyphenylene polyisocyanate.

Crude polyisocyanates may also be used in the compositions of the present invention, such as crude toluene diisocyanate obtained by the phosgenation of a mixture of toluene diamines or crude diphenylmethane isocyanate obtained by the phosgenation of crude diphenylmethane diamine.

Chain-extending agents which may be employed in the preparation of the polyurethane foams include those compounds having at least two functional groups bearing active hydrogen atoms such as water, hydrazine, primary and secondary diamines, amino alcohols, amino acids, hydroxy acids, glycols, or mixtures thereof. A preferred group of chain-extending agents includes water, ethylene glycol, 1,4-butanediol and primary and secondary diamines which react more readily with the prepolymer than does water such as phenylene diamine, 1,4-cyclohexane-bis-(methylamine), ethylenediamine, diethylenetriamine, N-(2-hydroxypropyl)-ethylenediamine, N,N'-di(2-hydroxypropyl)ethylenediamine, piperazine, and 2-methylpiperazine.

Any suitable catalyst may be used including tertiary amines such as, for example, triethylenediamine, N-methylmorpholine, N-ethylmorpholine, diethylethanolamine, N-cocomorpholine, 1-methyl-4-dimethylaminoethylpiperazine, 3-methoxypropyldimethylamine, N,N,N'-trimethylisopropyl propylenediamine, 3-diethylaminopropyldiethylamine, dimethylbenzylamine, and the like. Other suitable catalysts are, for example, dibutyltin dilaurate, dibutyltindiacetate, stannous chloride, dibutyltin di-2-ethyl hexanoate, stannous oxide, as well as other organometallic compounds such as are disclosed in U.S. Patent No. 2,846,408.

A surface-active agent is generally necessary for production of high grade polyurethane foam according to the present invention, since in the absence of same, the foams collapse or contain very large uneven cells. Numerous surface-active agents have been found satisfactory. Nonionic surface active agents are preferred. Of these, the nonionic surface-active agents such as the well-known silicones have been found particularly desirable. Other surface-active agents which are operative, although not preferred, include polyethylene glycol ethers of long chain alcohols, tertiary amine or alkanolamine salts of long chain alkyl acid sulfate esters, alkyl sulfonic esters, and alkyl arylsulfonic acids.

The following examples illustrate the nature of the invention. All parts are by weight unless otherwise designated. The physical properties were determined using the following ASTM test methods:

D1622
D1621
D790
D648
D1037
D2026
D2240

The following abbreviations were employed in the examples below;

Polyol A is a propylene oxide adduct of toluenediamine having a hydroxyl number of about 390 containing a 90 percent blend of 2,3-and 3,4-toluenediamine and 10 percent 2,4-and 2,6-toluenediamine.

Polyol B is a propylene oxide-ethylene oxide adduct of the toluenediamine of Polyol A containing 30 percent ethylene oxide and having a hydroxyl of about 390.

Polyol C is an ethylene oxide adduct of the toluenediamine of Polyol A having a hydroxyl number of about 450.

Polyol D is a propylene oxide adduct of a mixture of sucrose and propylene glycol having a functionality of about 4 and a hydroxyl number of about 400.

Polyol E is a propylene oxide adduct of glycerine having a hydroxyl number of about 240.

Polyol F is a propylene oxide adduct of propylene glycol having a hydroxyl number of about 265.

Polyol G is a blend of 88.25 percent Polyol A and 11.75 percent of Polyol F.

4

Isocyanate A is a crude diphenylmethane diisocyanate containing about 45 percent 2-ring oligomer of which about 6.7 percent is 2,4′-diphenylmethane diisocyanate and about 93.3 percent is 4,4′-diphenylmethanediisocyanate and about 55 percent is 3-ring or more.

Fyrol CEF is tris-2-chloroethyl phosphate sold by Stauffer Chemical Corp.

PHT-4 diol is tetrabromophthalate diol sold by Great Lakes Chemical Corp.

Dabco 33LV is a triethylenediamine catalyst sold by Air Products Corp.

DC-193 is a silicone surfactant sold by Dow Corning Corp.

Examples 1-4

Examples 1-4 illustrate the polyols and the blends which were employed in the succeeding examples.

TABLE I

| Example | 1 | 2 | 3 | 4 |
|---|---|---|---|---|
| Polyol Blend | A | B | C | D |
| Polyol A | 61.8 | - | - | - |
| Polyol B | - | 61.8 | - | - |
| Polyol C | - | - | 61.8 | - |
| Polyol D | - | - | - | 61.8 |
| Polyol E | 30.0 | 30.0 | 30.0 | 30.0 |
| Polyol F | 8.2 | 8.2 | 8.2 | 8.2 |

Examples 5-26

Examples 5-26 illustrate the foam formulations employed and the resulting physical properties of Tables II, III and IV. The formulations which pass the UL94V-O classification are shown in Examples 7, 12, and 21. In order to pass the UL94V-O test it is required that the test materials

a. not have any specimens which burn with flaming combustion for more than 10 seconds after either application of the test flame,

b. not have a total flaming combustion time exceeding 50 seconds for the 10 flame applications for each set of five specimens,

c. not have any specimens which burn with flaming or glowing combustion up to the holding clamp,

d. not have any specimens which drip flaming particles that ignite the dry absorbent surgical cotton located 12 inches (305 mm) below the test specimen, and

e. not have any specimens with glowing combustion which persists for more than 30 seconds after the second removal of the test flame.

The polyurethane foams of Tables II, III, and IV were prepared by charging a container with a suitable quantity of the reactants with the exception of the isocya nate as tabulated. The mixture was stirred for about 30 seconds and allowed to set until the air bubbles had dissipated. The calculated amount of polyisocyanate was added to the container, and the resulting mixture was stirred for about 35 seconds, and the foam was allowed to rise therein. After the foam rise was completed, the resulting foam was cured for about seven days at room temperature. The physical properties were then determined.

6

0 239 891

## TABLE II

| Example | 5 | 6 | 7 | 8 | 9 | 10 | 11 |
|---|---|---|---|---|---|---|---|
| **Formulation** | | | | | | | |
| Polyol Blend A | 100 | 100 | 100 | 100 | 100 | – | – |
| Polyol Blend B | – | – | – | – | – | 100 | 100 |
| Polyol Blend C | – | – | – | – | – | – | – |
| Polyol Blend D | – | – | – | – | – | – | – |
| Melamine | – | 10 | 20 | – | – | – | 10 |
| FYROL CEF | – | – | – | 20 | – | – | – |
| PHT-4 Diol | – | – | – | – | 20 | – | – |
| Water (includes water in polyol) | .55 | .58 | .62 | .55 | .55 | .55 | .58 |
| Dabco 33LV | .8 | .8 | .8 | .8 | .8 | .8 | .8 |
| DC-193 | .5 | .5 | .5 | .5 | .5 | .5 | .5 |
| Isocyanate A | 93 | 93.5 | 94 | 93 | 100 | 93 | 93.5 |

TABLE II – continued

| Example | 5 | 6 | 7 | 8 | 9 | 10 | 11 |
|---|---|---|---|---|---|---|---|
| **Physical Properties** | | | | | | | |
| Core Density, $Kg/m^3$ | 191 | 187 | 192 | 200 | 197 | – | 189 |
| Butler Chimney Test | | | | | | | |
| % wt. Retained | 89.8 | 94.7 | 99.1 | 95.7 | 91.5 | – | 95.0 |
| Extinguish time, sec. | 44 | 46 | 12 | 14 | 20 | – | 47 |
| Oxygen Index, % | 19 | 20 | 21 | 23 | 19.5 | – | 21 |
| **UL-94 Vertical Burn (Five Samples)** | | | | | | | |
| Flame Duration | | | | | | | |
| after 1st ignition, sec. | 16 | 7.6 | 2.7 | 14.4 | 22.6 | – | 9.8 |
| after 2nd ignition, sec. | 0 | .2 | 3.9 | 10.4 | 9.2 | – | 4.8 |
| Total Combustion Time, sec. | – | 39 | 33 | 124 | 159 | – | 73 |
| Burn to Clamp, Yes/No | Y | Y | N | Y | Y | – | Y |
| Cotton ignition, Yes/No | N | N | N | N | N | – | N |
| Pass/Fail | F | F | P | F | F | – | F |

0 239 891

TABLE III

| Example | 12 | 13 | 14 | 15 | 16 | 17 | 18 |
|---|---|---|---|---|---|---|---|
| Formulation | | | | | | | |
| Polyol Blend A | - | - | - | - | - | - | - |
| Polyol Blend B | 100 | - | - | - | - | - | - |
| Polyol Blend C | - | 100 | 100 | 100 | - | - | - |
| Polyol Blend D | - | - | - | - | 100 | 100 | 100 |
| Melamine | 20 | - | 10 | 20 | - | 10 | 20 |
| Water (includes water in polyol) | .62 | .55 | .58 | .62 | .55 | .58 | .62 |
| Dabco 33LV | .8 | .8 | .8 | .8 | .8 | .8 | .8 |
| DC-193 | .5 | .5 | .5 | .5 | .5 | .5 | .5 |
| Isocyanate A | 94 | 93 | 93.5 | 94 | 93 | 93.5 | 94 |

TABLE III – continued

| | 12 | 13 | 14 | 15 | 16 | 17 | 18 |
|---|---|---|---|---|---|---|---|
| **Physical Properties** | | | | | | | |
| Core Density, $Kg/m^3$ | 186 | – | – | – | 208 | 199 | 207 |
| Butler Chimney Test | | | | | | | |
| % wt. Retained | 98.9 | – | – | – | 38.6 | 69.9 | 85.8 |
| Extinguish time, sec. | 21 | – | – | – | 149 | 93 | 81 |
| Oxygen Index, % | 21 | – | – | – | 18.5 | 19 | 19 |
| **UL-94 Vertical Burn (Five Samples)** | | | | | | | |
| Flame Duration | | | | | | | |
| after 1st ignition, sec. | 4.2 | – | – | – | 86 | 67 | 42 |
| after 2nd ignition, sec. | 1.2 | – | – | – | 0 | 0 | 0 |
| Total Combustion Time, sec. | 27 | – | – | – | – | – | – |
| Burn to Clamp, Yes/No | N | – | – | – | Y | Y | Y |
| Cotton ignition, Yes/No | N | – | – | – | N | N | N |
| Pass/Fail, P/F | P | – | – | – | F | F | F |

0 239 891

TABLE IV

| Example | 19 | 20 | 21 | 22 | 23 | 24 |
|---|---|---|---|---|---|---|
| Formulation | | | | | | |
| Polyol Blend A | 100 | 100 | 100 | – | – | – |
| Polyol B | – | – | – | 100 | 100 | 100 |
| Melamine | 0 | 10 | 20 | 0 | 10 | 20 |
| Water (includes water in polyol) | 0.55 | 0.58 | 0.62 | 0.55 | 0.58 | 0.62 |
| Dabco 33LV | 0.8————————————————————————————————> | | | | | |
| DC-193 | 0.5————————————————————————————————> | | | | | |
| Isocyanate A | 93 | 93.5 | 94 | 111 | 111.5 | 112 |

TABLE IV – continued

| Example | 19 | 20 | 21 | 22 | 23 | 24 |
|---|---|---|---|---|---|---|
| **Physical Properties** | | | | | | |
| Core Density, pcf | 195 | 200 | 202 | 197 | 208 | 210 |
| Butler Chimney Test | | | | | | |
| % wt. retained | 82.4 | 84.3 | 95.3 | 75.4 | 78.1 | 90.6 |
| Extinguish time, sec. | 60 | 50 | 17 | 100 | 110 | 26 |
| Oxygen Index, % | 18.5 | 19.5 | 20.5 | 18 | 19 | 20 |
| UL 94 Vertical Burn (5 samples) | | | | | | |
| Flame Duration | | | | | | |
| after 1st ignition, sec. | 38.4 | 8.9 | 4.1 | 24.2 | 9.8 | 6.2 |
| after 2nd ignition, sec. | 3.2 | 5.8 | 3.8 | 0.9 | 2.3 | 4.3 |
| Total Combustion Time, sec. | 208 | 73.5 | 39.5 | 125.5 | 60.5 | 52.5 |
| Burn to Clamp, Yes/No | Y | N | N | Y | N | N |
| Cotton Ignition, Yes/No | N | N | N | N | N | N |
| Pass/Fail | F | F | P | F | F | F |

0 239 891

Examples 25-26

All the components, with the exception of the isocyanate, were blended and charged into the B-component working tank of an Admiral low pressure machine. The isocyanate was charged into the A-component tank. The temperature of the resin was adjusted to 32°C while the isocyanate temperature was adjusted to about 25°C. The ingredients were then pumped into a mixing head and injected into a mold heated to 43°C. The parts were demolded after about 12 minutes. Physical properties were then determined as shown in Table V.

TABLE V

| Example | 25 | 26 |
|---|---|---|
| **Formulation** | | |
| Polyol G | 70 | 70 |
| Polyol E | 30 | 30 |
| DC-193 | 0.5 | 0.5 |
| Water (including water in polyol) | 0.55 | 0.65 |
| DABCO 33LV | 0.8 | 0.8 |
| Melamine | - | 20 |
| Isocyanate A | 93.0 | 94.5 |
| **Physical Properties** | | |
| Cream Time, sec. | 32 | 31 |
| Gel Time, sec. | 105 | 60 |
| Tack-free Time, sec. | 170 | 100 |
| Density | | |
|   overall, $Kg/M^3$ | 360 | 416 |
|   core, $Kg/M^3$ | 320 | 368 |
| Compression strength, kPa | | |
|   parallel at 10% strain | 7586 | 9653 |
| Flexural strength, kPa, parallel | 11032 | 16548 |
| Heat distortion temp. at 455 kPa | | |
|   °C parallel | 74 | 103 |
| Heat distortion temp. at 1820 kPa | | |
|   °C parallel | 57 | 93 |
| Screw holding power, kg | 131.5 | 175 |
| Nail holding power, kg | 31.7 | 61.7 |
| Dimentional stability | | |
|   Heat aging at 70°C | | |
|     % volume change after 24 hrs. | 0.2 | 0.4 |
|     % volume change after 7 days | 0.5 | 0.7 |
|   Humid aging at 100% R.H. and 70°C | | |
|     % volume change after 24 hrs. | 0.9 | 1.1 |
|     % volume change after 7 days | 1.3 | 1.7 |
| Surface hardness, Shore D | 50 | 60 |
| *Butler Chimney Results | | |
|   % weight retained | 90 | 99 |
|   Extinguish time, sec. | 44 | 13 |
| *UL 94 V-D, five samples | | |
|   Flame Duration | | |
|     avg. after 1st ignition, sec. | 16 | 6.8 |
|     avg. after 2nd ignition, sec. | 0 | 2.8 |
|     burn longer than 10 sec. | | |
|       after any ignition, Yes/No | Y | N |
|     total combustion time, sec. | 80 | 48 |
| Burn to Clamp, Yes/No | Y | N |
| Cotton Ignition, Yes/No | N | N |
| Pass/Fail | F | P |

*Testing done on CORE samples

**Claims**

1. A rigid high density polyurethane foam comprising the reaction product of

(a) an ethylene oxide-propylene oxide adduct of toluenediamine or diaminodiphenylmethane having a molecular weight range from about 400 to about 800 containing less than 35 percent ethylene oxide,

(b) optionally a polyoxyalkylene polyol other than one derived from toluenediamine or diaminodiphenylmethane having a molecular weight range from about 200 to about 1000,

(c) catalyst, surfactant, blowing agent,

(d) an organic polyisocyanate, and

(e) from about 5 percent to about 20 percent melamine based on the total weight of the composition.

2. The rigid foam of claim 1 wherein the organic polyisocyanate is selected from the group consisting of crude toluenediisocyanate, crude methylenediphenyldiisocyanate, and crude polymethylene polyphenylene polyisocyanate.

3. The rigid foam of claim 1 wherein the concentration of (b) is from about 0 percent to about 50 percent based on the total weight of the composition.

4. A process for the preparation of a high density polyurethane foam reacting

(a) an ethylene oxide-propylene oxide adduct of toluenediamine or diaminodiphenylmethane having a molecular weight range from about 400 to about 800 containing less than 35 percent ethylene oxide,

(b) optionally a polyoxalkylene polyol other than one derived from toluenediamine or diaminodiphenylmethane having a molecular weight range from about 200 to about 1000,

(c) catalyst, surfactant, blowing agent,

(d) an organic polyisocyanate, and

(e) from about 5 percent to about 20 percent melamine based on the total weight of the composition.

5. The process of claim 4 wherein the organic polyisocyanate is selected from the group consisting of crude toluenediisocyanate, crude methylenediphenyldiisocyanate, and crude polymethylene polyphenylene polyisocyanate.

6. The process of claim 4 wherein the concentration of (b) is from about 0 percent to about 50 percent based on the total weight of the composition.